(19) Europäisches Patentamt / European Patent Office / Office européen des brevets

(11) **EP 3 787 260 B1**

(12) **EUROPEAN PATENT SPECIFICATION**

(45) Date of publication and mention
of the grant of the patent:
**03.11.2021 Bulletin 2021/44**

(51) Int Cl.:
*H04L 29/08* (2006.01)     *H04L 29/06* (2006.01)

(21) Application number: **20189175.1**

(22) Date of filing: **03.08.2020**

(54) **SYSTEM AND METHOD FOR GENERATING A DBC FILE**

SYSTEM UND VERFAHREN ZUR ERZEUGUNG EINER DBC-DATEI

SYSTÈME ET PROCÉDÉ DE GÉNÉRATION D'UN FICHIER DBC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2019 EP 19192061**

(43) Date of publication of application:
**03.03.2021 Bulletin 2021/09**

(73) Proprietor: **Argus Cyber Security Ltd
6789155 Tel Aviv (IL)**

(72) Inventors:
• **Mousseri, Shir**
  **65824 Schwalbach a. Ts. (DE)**
• **Sulima, Elena**
  **65824 Schwalbach a. Ts. (DE)**

(74) Representative: **Continental Corporation
c/o Continental Teves AG & Co. OHG
Intellectual Property
Guerickestraße 7
60488 Frankfurt a. Main (DE)**

(56) References cited:
**US-A1- 2002 174 218     US-A1- 2019 052 543**

**Description**

**FIELD OF THE INVENTION**

The present invention relates generally to identifying messages. More specifically, the present invention relates to automatically generating descriptions of messages communicated over a network.

**BACKGROUND OF THE INVENTION**

Components connected to in-vehicle networks communicate by sending messages. For example, electronic control units (ECUs) send and receive messages over a Controller Area Network (CAN) or an Ethernet physical network layer. To enable correctly identifying and processing messages, a description of messages is typically provided to ECUs or other components, e.g., in a Database CAN or CAN DB (DBC) or similar file. Accordingly, without a DBC file (or data typically included in a DBC file), ECUs cannot function properly. However, there currently exists no system or method that can automatically generate, store and distribute a DBC file. Document US2002/174218 describes a system which captures and analyses messages by matching them to a network model to derive events.

**SUMMARY OF THE INVENTION**

To determine boundaries between messages in a multi-message transaction, some embodiments may, based on examining the values of first and second bits i and i' included in a plurality of instances of the multi-message transaction: calculate a P(i,i') value that reflects a level of dependency between a change of a value of bit i and a change of a value of bit i'; calculate a P(i',i) value that reflects a level of dependency between a change of a value of bit i' and a change of a value of bit i; and determine bits i and i' belong to the same message if: P(i,i') is greater than a first threshold, and a function of P(i',i) and P(i,i') is greater than a second threshold.

In some embodiments, if the number of times the value of bit i, in an instance of the multi-message transaction, is different from the value of bit i in a subsequent instance of the multi-message transaction is greater than a threshold then an embodiment may set the value of P(i,i') based on relating the number of times the values of both bits i and i' in an instance of the multi-message transaction are respectively different from the values of bits i and i' in a subsequent instance of the multi-message transaction to the number of times the value of bit i, in an instance of the multi-message transaction, is different from the value of bit i in a subsequent instance of the multi-message transaction.

If the number of times the value of bit i, in an instance of the multi-message transaction, is different from the value of bit i in a subsequent instance of the multi-message transaction is less than a threshold then an embodiment may set the value of P(i,i') based on relating the number of times the values of both bits i and i' in an instance of the multi-message transaction are respectively different from the values of bits i and i' in a subsequent instance of the multi-message transaction to a function of the threshold and the number of times the value of bit i, in an instance of the multi-message transaction, is different from the value of bit i in a subsequent instance of the multi-message transaction.

Determining a boundary between a first and second messages may include determining bits i and i' belong to the same message if the value of P(i,i') is greater than a first threshold and the value of a function of the values of P(i,i') and P(i',i) is greater than a second threshold. A plurality of instances of a multi-message transaction may be examined according to a time of their appearance on an in-vehicle network and a change of a value of bit i may be determined by comparing the value of bit i in an instance of the multi-message transaction to the value of bit i in a subsequent, in time, instance of the multi-message transaction.

An embodiment may generate, based on a plurality of instances of the composite-message transaction, a dependencies matrix, wherein a cell(i,i') in the matrix may reflect a level of dependency between a change of a value of bit i and a change of a value of bit i' included in the multi-message transaction. An embodiment may determine boundary between first and second messages included in the composite-message based on the matrix. Other aspects and/or advantages of the present invention are described herein.

**BRIEF DESCRIPTION OF THE DRAWINGS**

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:

Fig. 1 shows a block diagram of a computing device according to illustrative embodiments of the present invention;

Fig. 2 shows a system according to illustrative embodiments of the present invention;

Fig. 3 shows a system according to illustrative embodiments of the present invention;

Fig. 4 shows a composite-message according to illustrative embodiments of the present invention;

Fig. 5 shows a set of instances of a composite-message according to illustrative embodiments of the present invention;

Fig. 6 shows a dependencies matrix according to illustrative embodiments of the present invention;

Fig. 7 shows a dependencies matrix according to illustrative embodiments of the present invention;

Fig. 8 shows a dependencies matrix according to illustrative embodiments of the present invention; and

Fig. 9 shows a flow of a method according to illustrative embodiments of the present invention.

## DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

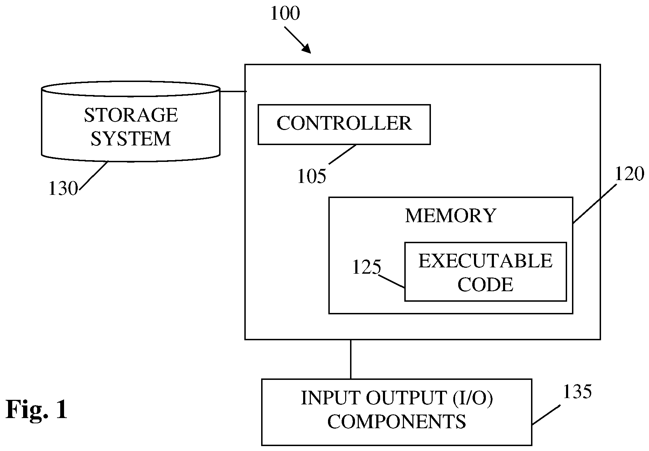

Reference is made to Fig. 1, showing a non-limiting, block diagram of a computing device or system 100 that may be used by, or included in, a system according to some embodiments of the present invention. Computing device (or system) 100 may include a controller 105 that may a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application, e.g., in a server, that generates or creates software update objects and/or executable code 125 may be an application, e.g., in a device being updated, that uses software update objects to update software or firmware objects to update a device as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, servers, devices, units or modules described herein, may be, or may include, controller 105, memory 120 and executable code 125. Computing systems discussed herein such as servers or devices being updated may include components such as in Fig. 1.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, storage system 130 may be a non-volatile memory (e.g., a flash memory) included in memory 120 may be. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 may include a flash memory and a RAM), and a plurality of storage units. A system may additionally include other suitable hardware components and/or software components. In some embodiments, a system may include or may be, for example, a server computer, a network device and any number of target or remote devices, e.g., internet of things (IoT) devices, electronic control units (ECUs) in a vehicle, e.g., ECUs included in a car, a boat or an airplane.

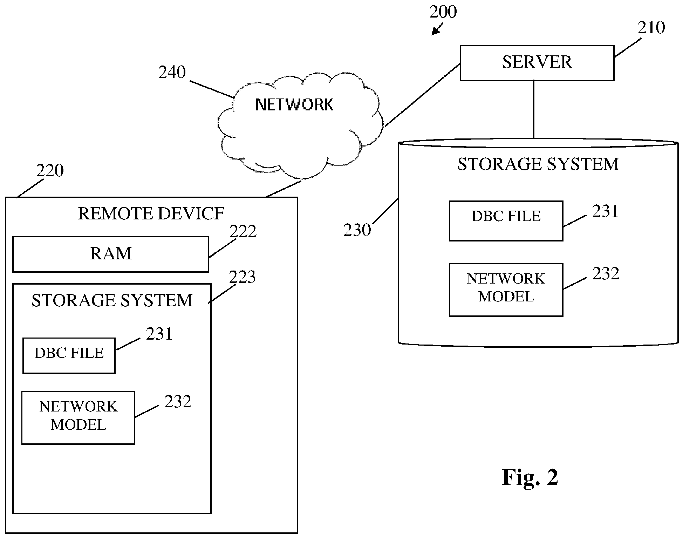

Reference is made to Fig. 2, a system 200 according to some embodiments of the present invention. As shown, system 200 may include a server 200 and a remote device 220. The terms "target device", "target machine", "remote machine" and "remote device" as used in this application refer to a computing device to which messages are sent or destined to, which is being updated and so on. The terms "target device", "target machine", "remote machine" and "remote device" as referred to herein may mean the same thing and may be used interchangeably herein. For example, a target or remote device can be an ECU or an IoT device. Although for the sake of clarity, a single remote device is shown, it will be understood that system 200 may includes many such devices, e.g., dozens of ECUs in a vehicle may be included in system 200. Embodiments of the invention may be related or relevant to any type of target device 220. For example, embodiments of the invention include ECUs in a car, train, aircraft, ship or any system or vehicle that lifts, carries or transports humans, livestock or cargo.

As shown, target device 220 may include a RAM 222 that may be, or may include components as described with respect to memory 120. As further shown, target device 220 may include a storage system 223 that may be, for example, flash memory. While flash memory is mainly described or referred to herein, it will be understood that any electronic, non-volatile computer storage medium adapted to store digital data and/or be electrically erased and reprogrammed may be used instead of, or in addition to, storage system 223.

System 200 or components of system 200 may include components such as those shown in Fig. 1. For example, server 210 and target device 220 may be, or may include, a controller 105, a memory 120 and executable code 125.

As further shown, system 200 may include, or be operatively connected to a network 240.

Network 240 may be any suitable network that enables server 210 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240.

As shown, server 210 may be operatively connected (e.g., directly or over a network) to storage system 230. Storage system 230 may be similar to, or include components of, storage system 130, for example, storage system 230 may be a hard disk or a network storage device or system. As further shown, storage system 230 may include a DBC file 231 and a network model 232. DBC file 231 (referred to herein as DBC 231) may be a file or other digital data object, generated by some embodiments as further described, that includes a description of messages. For example, DBC 231 may include, for a given message, an identification (ID) of the message, the size of the message, the source (sending) ECU and/or any other metadata related to a message. For the sake of simplicity, as referred to herein, a DBC file may be any file or digital object that includes a description of messages communicated over a network.

It is noted that in some known systems and methods, a DBC file may be, or may include, descriptions of some or even all of the messages that are sent over an in-vehicle network. Known and/or current systems typically create a DBC file, e.g., by a server or backend device, possibly based on specifications from manufacturers or developers, such off-line generated DBC (or parts of it) are then provided to ECUs or other components in a vehicle thus enabling them to correctly process messages. A DBC (or DBC file) are referred to herein may include only some of the messages that are seen on a network.

As described, embodiments of the invention create a DBC file automatically, possibly in a vehicle. Accordingly, a DBC file can be generated without any prior knowledge. Moreover, embodiments of the invention may automatically or dynamically update a DBC file, e.g., when new components (that send yet unknown messages) are connected to an in-vehicle network.

Network model 232, DBC 231 and any other objects stored in storage system 230 and/or storage system 223, e.g., any suitable digital data structures, constructs or computer data objects that store or include digital information. For example, DBC 231 and network model 232 may be, or may include, files, tables, entries in a database or any other digital information object or construct and thus may enable storing, retrieving and modifying digital information, e.g., message descriptions, values, strings and the like. A DBC 231 and/or network model 232 (or parts thereof) may be created by remote device 220, stored in storage system 233 as shown and may be sent to server 210. A DBC 231 and/or network model 232 (or parts thereof) may be created by server 210, stored in storage system 230 and may be sent to remote device 220.

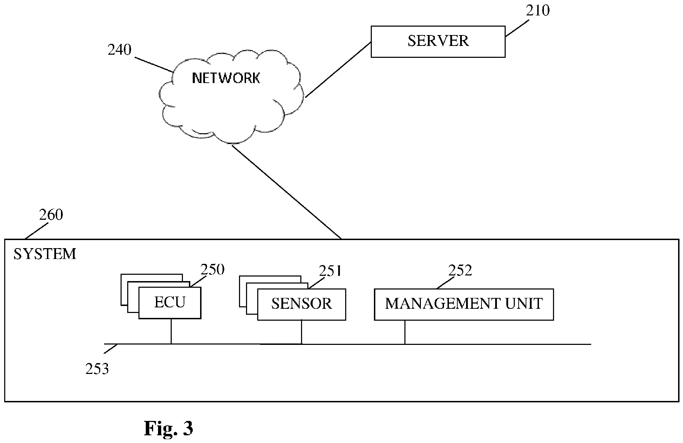

Reference is made to Fig. 3 that shows a system according to illustrative embodiments of the present invention. System 260 may be any device or system, e.g., included in a vehicle or any other applicable entity, for example, system 260 may be, or may include, remote device 220. For example, components of system 260 may be, or they may be included or embedded in, an IoT device or a vehicle, e.g., an aircraft, car train or ship. Although vehicles such as cars are mainly described herein, other vehicles such as ships, trains and aircrafts are similarly applicable, it will be understood that the scope of the invention is not limited by the type, usage or nature of system 260. For example, system 260 may be, or it may be included in, a ship, airplane or car that includes an in-vehicle network 253, a management unit 252, one or more ECUs 250 and one or more sensors 251 (collectively referred to hereinafter as ECUs 250 and/or sensors 251 or individually as ECU 250 and/or sensor 251, merely for simplicity purposes). For example, a sensor 251 may be an oil pressure sensor, a temperature sensor and the like, e.g., when an embodiment is, or is included in a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

Network 253 may be any suitable network that enables ECUs 250, sensors 251 and מ. management unit 252 to communicate or exchange digital information. Network 253 may be, may include or may comprise any suitable network infrastructure and support any suitable protocol, e.g., a communication bus, Ethernet, CAN, internet protocol (IP), transmission control protocol (TCP) and the like. Accordingly, numerous elements of network 253 are implied but not shown, e.g., routers, gateways etc. It will be recognized that embodiments of the invention are not limited by the nature of network 253.

Messages communicated over a network (e.g., over in-vehicle network 253) are typically of a size that can accommodate more than one signal or value. For example, a message of eight bytes (64 bits) can carry an oil pressure value (or signal) and an engine temperature value or signal. As referred to herein, a composite-message (or multi-message) may be a message that includes a plurality of messages and/or a plurality of values or signals.

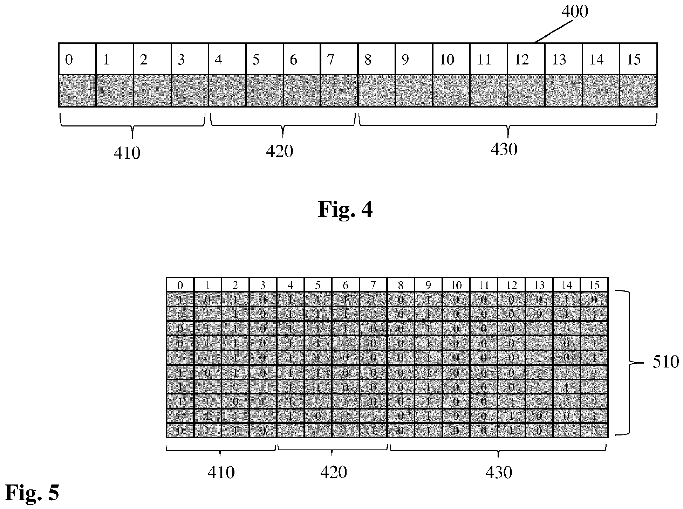

Reference is made to Fig. 4 which shows a composite-message (or complex-message or multi-message) 400 that includes three messages or signals or values 410, 420 and 430. For example, signal, value or message 410 may include an oil pressure value or level, and message 420 may include a vehicle's speed. As discussed, without a DBC file, a component cannot understand and/or correctly process messages, since, for example, without a DBC file, a component receiving composite-message 400 would not know that it contains three different values or signals.

An embodiment may assume that changes of adjacent bits that are part of the same signal, value or message, are more likely to be inter-dependent than changes of adjacent bits that are not part of the same signal, value or message. For example, when comparing (checking which bits changed value in) first and second instances of composite messages 400, it may be expected that the case of both bit 2 and bit 3 have changed is more likely than the case of both bit 3 and bit 4 changing.

Reference is made to Fig. 5 which shows a set of instances of a composite-message according to illustrative embodiments of the present invention. For example, looking at the values of message 430 in the set of instances of message 400 (520), one can see that every time there is a change of a certain bit, the next right bit is changed too. This is of course only because the signal or value in message 430 changes perfectly continuously over messages 510 (growing by 1 or 0 each time), but a similar behavior can be seen in normal continuous signals as well. Similarly, the values in message 410 seem discrete over sequence or set 510, those of message 420 seem pretty semi-continuous. As can be seen, adjacent bits that belong to the same value or signal tend to change together.

It is noted that determining boundaries between messages may be simpler when the signals, values or messages in a composite-message are independent but may be challenging when the values are somehow linked or inter-dependent, e.g., when messages 410, 420 and 430 are all related to the same physical unit, device or system in a vehicle and therefore frequently change together.

While a sequence of only ten instances of message 400 is shown in Fig. 5, any number of instances may be provided as input, the precision with which an embodiment may identify messages or boundaries between values or signals as described may be increased with the number of input messages. For example, ECU 250 may record a set of hundreds or thousands of instances of composite-message 400 and may process the set as described in order to generate a DBC 231.

An embodiment may examine a (possibly very large) set of composite-messages and record, for each 2 bits (denoted x and y) in the composite-message, the number of times that when bit x changes (from first to second instances of the composite message) bit y also changes.

For the sake of clarity and simplicity, a matrix is used to describe the inter-dependency between bits in a message. It will be understood that embodiments of the invention may store information shown and described herein as included in a matrix in any form or digital object or structure, for example, information in each cell in a matrix described herein may be stored as a separate object and pointes, links or references may be used to link objects. Accordingly, it will be understood that a matrix as described herein is introduced for explanatory purpose and other constructs may be used.

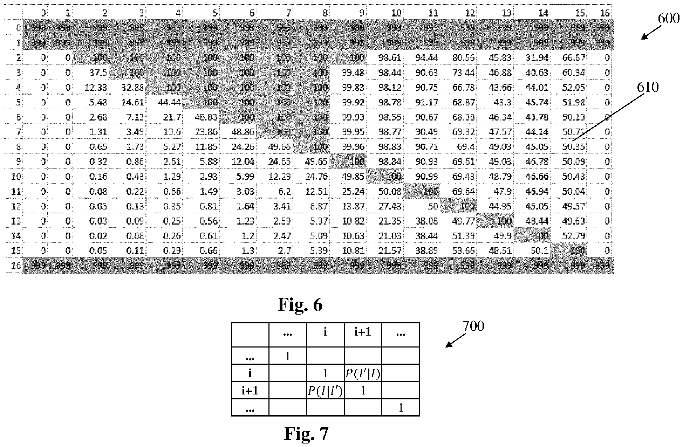

Reference is made to Fig. 6 which shows a dependencies matrix 600 according to illustrative embodiments of the present invention. For example, if a message for which matrix 600 is created and populated is 16 bits long then, as shown, matrix 600 may be a 16X16 (that is, message length X message length). As referred to herein, a cell(i,j) in matrix 600 is the cell or cross section between row i and column j. For example, cell(8,15) is the cell where row 8 and column 15 meet. A cell(x,y) may be record the number (or a function of the number) of times that when bit x changed (from first to subsequent message) bit y also changed. For example, a value in a cell(x,y) in matrix 600 may be a percentage, a probability or any other value that reflects the relation between a change in bit x and a change in bit y. For example, a value in cell(x,y) may be denoted by $P(Y|X)$ is the event where X is the event where bit x has changed and Y is the event where bit y has changed. 0 or 999 may denote no change was ever seen, e.g., as can be seen in matrix 600, bits 0, 1 and 16 do not change, that is, they are the same in all messages examined.

Matrix 600 may be populated by examining a large number of messages of a specific type and incrementing the value in cells as described such that a cell(x,y) in matrix 600 reflects or describes the dependency of bit y on bit x, with respect to change between consecutive messages.

A dependencies matrix may be used to determine the boundaries between values, signals or messages in a composite-message.

Reference is additionally made to Fig. 7 which shows a dependencies matrix 700 according to illustrative embodiments of the present invention. Matrix 700 is an example of a dependencies matrix describing bit i. In matrix 700, *I* is the event where bit i is changed, and *I'* is the event where bit i+1 is changed. The value of *P(I'|I)* may be used in determining whether bit i and i+1 are part of the same signal or not. For example, if *P(I'|I)* is large, it may mean that when bit i is changed, it is very likely that i+1 is changed too, thus, it may be determined by an embodiment that bits i and i+1 (e.g., bits 14 and 15) belong to the same signal, value or message in a composite-message. As shown, cells in the diagonal line in matrix 700 are all 1 reflecting the dependency of a bit on itself.

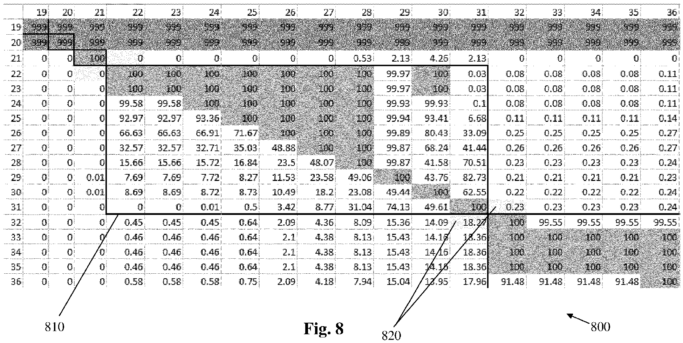

Reference is additionally made to Fig. 8 which shows a dependencies matrix 800 according to illustrative embodiments of the present invention. A bold rectangle, box or border 810 around cells defined by rows 22-31 and columns 22-31 is added for clarity. As can be seen, the values of *P(I'|I)* and *P(I|I')* inside rectangle 810 are high compared to those outside rectangle 810. For example, compared with values of cells inside rectangle 810, the values in cells 820 are distinctively low. As describe, a difference of values between cells as exemplified by cells inside and outside rectangle 810 may be identified and used to identify boundaries between values, signals or messages in a composite-message. Accordingly, based on data as shown in matrix 800, an embodiment may determine that the relevant composite-message includes a first signal, message or value in bits 19 and 20, a second value in bit 21, a third signal, value or message in bits 22-31 and so on.

Any algorithm or logic may be used for determining bits inter-dependencies measures that may be set in cells of a dependencies matrix (or otherwise maintained and used as described).

For example, to determine whether or not two bits (denoted i and i') belong to the same message, value or signal, or to determine boundaries between signals or values in a composite-message, an embodiment may examine the values of first and second bits i and i' included in a plurality of instances of a composite-message transaction and the embodiment may calculate, as described, a P(i,i') value that reflects a level of dependency between a change of a value of bit i and a change of a value of bit i'. An embodiment may further calculate a P(i',i) value that reflects a level of dependency between a change of a value of bit i' and a change of a value of bit i.

In some embodiments, a value of a cell(i,i') may be set according to one or more conditions, rules and logic. For example, if the number of changes of bit i is zero (that is, bit i never changes, it is the same in all instances of the relevant composite-message) then value in cell(i,i') may be set to zero. If the number of changes of bit i is greater than a firs threshold then the value in cell(i,i') may be set according to a function that involves values in cell(i,i') and cell(i',i), for example, the value of cell(i,i') may be set according to the formula below:

$$\text{value in cell(i,i')} = \frac{number\ of\ times\ i\ and\ i'\ changed}{number\ of\ times\ i\ changed}$$

Otherwise described, in some embodiments, if the number of times the value of bit i, in an instance of the multi-message transaction, is different from the value of bit i in a subsequent instance of the multi-message transaction is greater than a threshold then and embodiment may set the value of cell (i,i+1) based on relating the number of times the values of both bits i and i+1 in an instance of the multi-message transaction are respectively different from the values of bits i and i+1 in a subsequent instance of the multi-message transaction, to the number of times the value of bit i, in an instance of the multi-message transaction, is different from the value of bit i in a subsequent instance of the multi-message transaction.

In some embodiments, if the number of time bit i changed (from one instance of a composite-message to the next or subsequent instance) is less than the first threshold then the value of cell(i,i') may be set according to the formula below:

$$\text{value in cell(i,i')} = \frac{number\ of\ times\ i\ and\ i'\ changed}{number\ of\ times\ i\ changed \cdot (threshold - number\ of\ times\ i\ changed)}$$

For example, the method and calculations described may avoid false results, e.g., in cases where only a small set of composite-messages are available.

An embodiment may determine that bits i and i' belong to the same message, value or signal if a value in cell(i,i') is greater than a second threshold and if a function of values in cell(i',i) and cell(i,i') produces a result that is greater than a third threshold.

For example, to determine bits i and i' belong to, or are part of, the same signal, value or message, an embodiment may check whether or not the value in cell(i,i') is greater than a threshold (e.g., 7) and, in addition, whether or not a function involving the values of cell(i, i') and cell(i',i) produces a result that is greater than a threshold (e.g., 30) as shown below:

value in cell(i,i') > 7

$$(\text{value in cell}(i,i') + 0.3 * \text{value in cell}(i',i)) > 30$$

For example, with reference to matrix 800, replacing bits i and i' above with bits 25 and 26 will satisfy the conditions and indicate that bits 25 and 26 belong to the same value or signal while replacing bits i and i' above with bits 31 and 32 will not satisfy the above conditions and thus indicate that bits 31 and 32 are not part of the same value, signal or message. Accordingly, an embodiment may determine bits i and i' in a composite-message belong to the same value, signal or message if the value of cell (i,i') is greater than a first threshold and the value of a function of the values of cells (i,i') and (i',i) is greater than a second threshold.

Otherwise described if the number of times the value of bit i, in an instance of the multi-message transaction, is different from the value of bit i in a subsequent instance of the multi-message transaction is less than a threshold then an embodiment may set the value of cell (i,i+1) based on relating the number of times the values of both bits i and i+1 in an instance of the multi-message transaction are respectively different from the values of bits i and i+1 in a subsequent instance of the multi-message transaction to a function of a threshold and the number of times the value of bit i, in an instance of the multi-message transaction, is different from the value of bit i in a subsequent instance of the multi-message transaction.

Accordingly, an embodiment may determine boundaries between messages (or signals or values) in a multi-message transaction (or composite or complex message) by generating, based on a plurality of instances of the multi-message transaction, a dependencies matrix, wherein a cell (i,i') in the matrix reflects a level of dependency between a change of a value of bit i and a change of a value of bit i' included in the multi-message transaction; and determining a boundary between first and second messages based on the matrix.

In some embodiments, a plurality of instances of a complex, composite or multi message transaction are examined according to a time of their appearance on an in-vehicle network and a change of a value of a bit i is determined by comparing the value of bit i in an instance of the composite-message transaction to the value of bit i in a subsequent, in time, instance of the composite-message transaction.

As described, an embodiment may receive composite-messages, and fully characterize messages, signals and/or values in the composite-messages. For example, based on a sequence or a set of instances of composite-message 400, e.g., recorded from an in-vehicle network while the vehicle is operated, an embodiment may identify and characterize messages, signals or values 410, 420 and 430. For example, management unit 252 or one of ECUs 250 may be connected to in-vehicle network 253 and may record all messages communicated thereon. Next, management unit 252 or one of ECUs 250 may identify one or more types of composite-messages 400 (not shown) and, for each type of composite-message, characterize or describe (e.g., in a DBC 231) all messages, values or signals included therein. For example, if CAN is the architecture used then ECU 250 may identify or class types of composite-messages 400 based on their CAN IDs and, for each CAN ID, store in DBC 231 an/or network profile 232, information identifying, profiling and characterize content, messages, values as described.

For example, an embodiment, e.g., included in any one of: an on board diagnostic (OBD) dongle, remote device 220, server 210, ECU 250 and/or management unit 252, may be connected to an in-vehicle network, and, without being provided any information about, or related to, messages communicated on the network (in zero knowledge mode), the embodiment may, generate a DBC file that describes messages communicated over the network.

For example, generating DBC 231 may include generating information characterizing signals 410, 420 and 430 in composite-message 400, for example, determining and recording, in DBC 231, their respective lengths (4, 4, and 8 bits respectively), their respective order within composite-message 400 and so on.

Accordingly, embodiments of the invention enable a ruleset creator to understand the structure of messages and/or signals or values partitioning within messages (or composite-messages) communicated over an in-vehicle network, without getting or having any data, or previous knowledge related to, the messages (e.g., without a DBC file a vehicle manufacture). For example, embodiments of the invention enable anyone to provide recorded messages (e.g., recording of messages in an in-vehicle network) and get full understanding of the messages' signals structure and other attributes or characteristics as described.

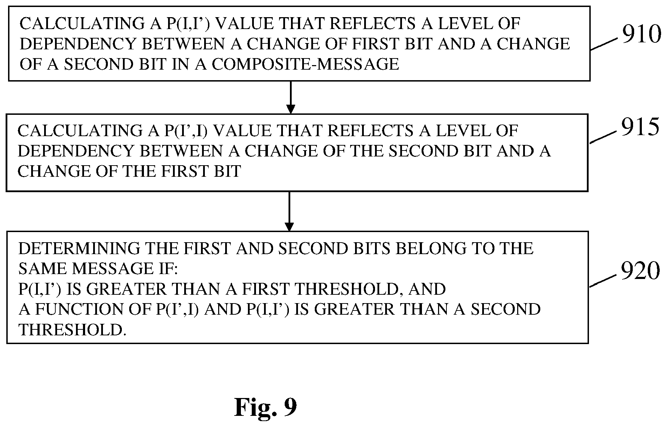

Reference is made to Fig. 9 which shows a flow of a method according to illustrative embodiments of the present invention. As shown by block 910, based on examining the values of first and second bits i and i' included in a plurality of instances of the multi-message transaction, a P(i,i') (or cell(i,i')) value that reflects a level of dependency between a change of a value of bit i and a change of a value of bit i' may be calculated, e.g., by server 210, management unit 252 and/or by ECU 250 as described. As shown by block 915, a P(i',i) (or cell(i',i)) value that reflects a level of dependency between a change of a value of bit i' and a change of a value of bit i may be calculated, e.g., as described. As shown by block 920, if the P(i,i') value is greater than a first threshold and a function of P(i',i) and P(i,i') produces a value greater than a second threshold then it may be determined that bits i and i' are part of the same signal, value or message in a composite-message.

An embodiment may characterize or profile messages. For example, an embodiment may examine values of messages 410, 420 and 430 and may record, e.g., in network model 232, actual values in messages 410 and/or data and metadata calculated or generated based on values in messages and/or based on any attributes of messages. For example, having identified that composite-message 400 includes three different values or signals, controller 105 in ECU 250 may calculate and record or store, e.g., in network model 232, an average value in message 420, a profile of message 430, e.g., maximal/minimal values in message 430, rate of change (over time or over messages) of a value in message 410 and so on.

Characteristics, attributes or profiles of messages or signals produced by some embodiments (and stored in network model 232) may be used for providing security. For example, having identified messages 410, 420 and 430 in composite-message 400 as described herein, an embodiment may generate profiles of messages 410, 420 and 430 and, using the profiles, generate rules or thresholds that may be used for detecting anomalies or security threats. For example, having determined an average value in message 410 is "8", an embodiment may set a high threshold of "10" and a low threshold of "6" for the value and, if a message 410 carrying a value below "6" or greater than "10" and embodiment may generate an alert or perform any action. While the above threshold rules are simplified examples, it will be understood that once an embodiments generates a DBC 231 that describes messages, any technique may be used for profiling a network 253, e.g., timing model, content model or a behavioral model may all be generated once messages are identified, models and any rules, criteria or logic may be used for providing security to a network. For example, using a model of an expected behavior (e.g., behavior defined by values in messages, messages' frequencies, messages' sequence or order in time and so on) ECU 250 may identify any deviation from an expected behavior, e.g., one caused by messages injected into network 253 by a hacker.

Embodiments of the invention further improve the relevant technological fields by dynamically selecting the type of data to include in update messages sent to a target device that is to be updated. As further described, an embodiment may dynamically and automatically select whether to send compressed data (first type) or uncompressed data (second type) and/or dynamically and automatically select whether or not to use patch file data (third type) etc. Of course, any combination of types may be selected.

In some embodiments, having identified messages as described, an embodiment may enforce security. For example, traffic on an in-vehicle may be profiled by an embodiment (e.g., frequency of messages, values in messages and so on) and an embodiment may then identify a deviation from a profile, may determine the deviation is an anomaly and may consequently perform an action, e.g., generate an alert, block suspicious messages and so on. An automatically generated DBC may be provided, e.g., to a system connected using an OBD or to a backend server.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true scope of the invention.

Various embodiments have been presented. Each of these embodiments may of course include features from other embodiments presented, and embodiments not specifically described may include various features described herein.

## Claims

1. A computer-implemented method of determining boundaries between messages in a multi-message transaction, the method comprising:

    based on examining the values of first and second bits i and i' included in a plurality of instances of the multi-message transaction:
    calculating a P(i,i') value that reflects a level of dependency between a change of a value of bit i and a change of a value of bit i';
calculating a P(i',i) value that reflects a level of dependency between a change of a value of bit i' and a change of a value of bit i; and
determining bits i and i' belong to the same message if:

P(i,i') is greater than a first threshold, and
a function of P(i',i) and P(i,i') is greater than a second threshold.

2.  The method of claim 1, comprising:

if the number of times the value of bit i, in an instance of the multi-message transaction, is different from the value of bit i in a subsequent instance of the multi-message transaction is greater than a threshold then:
setting the value of P(i,i') based on relating the number of times the values of both bits i and i' in an instance of the multi-message transaction are respectively different from the values of bits i and i' in a subsequent instance of the multi-message transaction to the number of times the value of bit i, in an instance of the multi-message transaction, is different from the value of bit i in a subsequent instance of the multi-message transaction.

3.  The method of claim 1, comprising:

if the number of times the value of bit i, in an instance of the multi-message transaction, is different from the value of bit i in a subsequent instance of the multi-message transaction is less than a threshold then:
setting the value of P(i,i') based on relating the number of times the values of both bits i and i' in an instance of the multi-message transaction are respectively different from the values of bits i and i' in a subsequent instance of the multi-message transaction to a function of the threshold and the number of times the value of bit i, in an instance of the multi-message transaction, is different from the value of bit i in a subsequent instance of the multi-message transaction.

4.  The method of claim 1, wherein determining a boundary between a first and second messages includes determining bits i and i' belong to the same message if the value of P(i,i') is greater than a first threshold and the value of a function of the values of P(i,i') and P(i',i) is greater than a second threshold.

5.  The method of claim 1, wherein the plurality of instances of the multi-message transaction are examined according to a time of their appearance on an in-vehicle network and wherein a change of a value of bit i is determined by comparing the value of bit i in an instance of the multi-message transaction to the value of bit i in a subsequent, in time, instance of the multi-message transaction.

6.  A computer-implemented method of identifying messages in a composite-message transaction, the method comprising:

generating, based on a plurality of instances of the composite-message transaction, a dependencies matrix, wherein a cell(i,i') in the matrix reflects a level of dependency between a change of a value of bit i and a change of a value of bit i' included in the multi-message transaction; and
determining a boundary between first and second messages included in the composite-message based on the matrix.

**Patentansprüche**

1.  Computerimplementiertes Verfahren zum Bestimmen von Grenzen zwischen Nachrichten in einer Mehrnachrichtentransaktion, wobei das Verfahren Folgendes aufweist:

anhand des Untersuchens der Werte eines ersten und eines zweiten Bits i und i', die in mehreren Instanzen der Mehrnachrichtentransaktion enthalten sind:

Berechnen eines P(i,i')-Werts, der ein Abhängigkeitsniveau zwischen einer Änderung eines Werts des Bits i und einer Änderung eines Werts des Bits i' reflektiert;
Berechnen eines P(i',i)-Werts, der ein Abhängigkeitsniveau zwischen einer Änderung eines Werts des Bits i' und einer Änderung eines Werts des Bits i reflektiert; und

Bestimmen, dass die Bits i und i' zu derselben Nachricht gehören, wenn:

P(i,i') größer als ein erster Schwellenwert ist und
eine Funktion von P(i',i) und P(i,i') größer als ein zweiter Schwellenwert ist.

**2.** Verfahren nach Anspruch 1, das Folgendes aufweist:
dann, wenn die Häufigkeit, mit der der Wert des Bits i in einer Instanz der Mehrnachrichtentransaktion von dem Wert des Bits i in einer folgenden Instanz der Mehrnachrichtentransaktion größer als ein Schwellenwert ist: Einstellen des Werts von P(i,i') anhand einer Beziehung der Häufigkeit, dass die Werte beider Bits i und i' in einer Instanz der Mehrnachrichtentransaktion jeweils von den Werten der Bits i und i' in einer folgenden Instanz der Mehrnachrichtentransaktion verschieden sind, zu der Häufigkeit, dass der Wert des Bits i in einer Instanz der Mehrnachrichtentransaktion von dem Wert des Bits i in einer folgenden Instanz der Mehrnachrichtentransaktion verschieden ist.

**3.** Verfahren nach Anspruch 1, das Folgendes aufweist:
dann, wenn die Häufigkeit, mit der der Wert des Bits i in einer Instanz der Mehrnachrichtentransaktion von dem Wert des Bits i in einer folgenden Instanz der Mehrnachrichtentransaktion kleiner als ein Schwellenwert ist: Einstellen des Werts von P(i,i') anhand einer Beziehung der Häufigkeit, dass die Werte beider Bits i und i' in einer Instanz der Mehrnachrichtentransaktion jeweils von den Werten der Bits i und i' in einer folgenden Instanz der Mehrnachrichtentransaktion verschieden sind, zu einer Funktion des Schwellenwerts und der Häufigkeit, dass der Wert des Bits i in einer Instanz der Mehrnachrichtentransaktion von dem Wert des Bits i in einer folgenden Instanz der Mehrnachrichtentransaktion verschieden ist.

**4.** Verfahren nach Anspruch 1, wobei das Bestimmen einer Grenze zwischen einer ersten und einer zweiten Nachricht enthält, zu bestimmen, dass die Bits i und i' zu derselben Nachricht gehören, wenn der Wert von P(i,i') größer als ein erster Schwellenwert ist und der Wert einer Funktion der Werte von P(i,i') und P(i',i) größer als ein zweiter Schwellenwert ist.

**5.** Verfahren nach Anspruch 1, wobei die mehreren Instanzen der Mehrnachrichtentransaktion gemäß einer Zeit ihres Erscheinens auf einem fahrzeuginternen Netz untersucht werden und wobei eine Änderung eines Werts des Bits i durch Vergleichen des Werts des Bits i in einer Instanz der Mehrnachrichtentransaktion mit dem Wert des Bits i in einer in der Zeit folgenden Instanz der Mehrnachrichtentransaktion bestimmt wird.

**6.** Computerimplementiertes Verfahren zum Identifizieren von Nachrichten in einer Transaktion zusammengesetzter Nachrichten, wobei das Verfahren Folgendes aufweist:

Erzeugen anhand mehrerer Instanzen der Transaktion zusammengesetzter Nachrichten einer Abhängigkeitsmatrix, wobei eine Zelle (i,i') in der Matrix ein Abhängigkeitsniveau zwischen einer Änderung eines Werts eines Bits i und einer Änderung eines Werts eines Bits i', die in der Mehrnachrichtentransaktion enthalten sind, reflektiert; und
Bestimmen einer Grenze zwischen einer ersten und einer zweiten Nachricht, die in der zusammengesetzten Nachricht enthalten sind, anhand der Matrix.

**Revendications**

**1.** Procédé mis en œuvre par ordinateur pour déterminer des limites entre des messages dans une transaction à messages multiples, le procédé comprenant les étapes suivantes :

sur la base de l'examen des valeurs des premier et second bits i et i' inclus dans une pluralité d'instances de la transaction à messages multiples :

calculer une valeur P(i, i') qui reflète un niveau de dépendance entre un changement d'une valeur du bit i et un changement d'une valeur du bit i' ;
calculer une valeur P(i', i) qui reflète un niveau de dépendance entre un changement d'une valeur du bit i' et un changement d'une valeur du bit i ; et

déterminer que les bits i et i' appartiennent au même message si :

P(i, i') est supérieur à un premier seuil, et

une fonction de P(i', i) et P(i, i') est supérieure à un second seuil.

2. Procédé selon la revendication 1, comprenant les étapes suivantes :

si le nombre de fois où la valeur du bit i, dans une instance de la transaction à messages multiples, est différente de la valeur du bit i dans une instance ultérieure de la transaction à messages multiples est supérieur à un seuil, alors : fixer la valeur de P(i, i') sur la base du rapport entre le nombre de fois où les valeurs des deux bits i et i' dans une instance de la transaction à messages multiples sont respectivement différentes des valeurs des bits i et i' dans une instance ultérieure de la transaction à messages multiples et le nombre de fois où la valeur du bit i, dans une instance de la transaction à messages multiples, est différente de la valeur du bit i dans une instance ultérieure de la transaction à messages multiples.

3. Procédé selon la revendication 1, comprenant les étapes suivantes :

si le nombre de fois où la valeur du bit i, dans une instance de la transaction à messages multiples, est différente de la valeur du bit i dans une instance ultérieure de la transaction à messages multiples est inférieur à un seuil, alors : fixer la valeur de P(i, i') sur la base du rapport entre le nombre de fois où les valeurs des deux bits i et i' dans une instance de la transaction à messages multiples sont respectivement différentes des valeurs des bits i et i' dans une instance ultérieure de la transaction à messages multiples et une fonction du seuil et du nombre de fois où la valeur du bit i, dans une instance de la transaction à messages multiples, est différente de la valeur du bit i dans une instance ultérieure de la transaction à messages multiples.

4. Procédé selon la revendication 1, dans lequel la détermination d'une frontière entre un premier message et un second message comprend la détermination que les bits i et i' appartiennent au même message si la valeur de P(i, i') est supérieure à un premier seuil et la valeur d'une fonction des valeurs de P(i, i') et P(i', i) est supérieure à un second seuil.

5. Procédé selon la revendication 1, dans lequel la pluralité d'instances de la transaction à messages multiples sont examinées selon le moment de leur apparition sur un réseau embarqué, et où un changement d'une valeur du bit i est déterminé en comparant la valeur du bit i dans une instance de la transaction à messages multiples à la valeur du bit i dans une instance ultérieure, dans le temps, de la transaction à messages multiples.

6. Procédé mis en œuvre par ordinateur pour identifier des messages dans une transaction à messages composites, le procédé comprenant les étapes suivantes :

générer, sur la base d'une pluralité d'instances de la transaction à messages composites, une matrice de dépendances, où une cellule (i, i') dans la matrice reflète un niveau de dépendance entre un changement d'une valeur de bit i et un changement d'une valeur de bit i' inclus dans la transaction à messages multiples ; et déterminer une frontière entre le premier message et le second message inclus dans le message composite sur la base de la matrice.

100

STORAGE
SYSTEM

130

CONTROLLER

105

MEMORY

125

EXECUTABLE
CODE

120

**Fig. 1**

INPUT OUTPUT (I/O)
COMPONENTS

135

200

210

SERVER

240

NETWORK

220

REMOTE DEVICF

222

RAM

223

STORAGE SYSTEM

231

DBC FILE

232

NETWORK
MODEL

230

STORAGE SYSTEM

231

DBC FILE

232

NETWORK
MODEL

**Fig. 2**

210

SERVER

240

NETWORK

260

SYSTEM

250

ECU

251

SENSOR

252

MANAGEMENT UNIT

253

**Fig. 3**

400

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
|   |   |   |   |   |   |   |   |   |   |    |    |    |    |    |    |

410  420  430

**Fig. 4**

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 1 | 0 | 1 | 0 | 1 | 1 | 1 | 1 | 0 | 1 | 0  | 0  | 0  | 0  | 1  | 0  |
| 0 | 1 | 1 | 0 | 1 | 1 | 1 | 0 | 0 | 1 | 0  | 0  | 0  | 0  | 1  | 1  |
| 0 | 1 | 1 | 0 | 1 | 1 | 1 | 0 | 0 | 1 | 0  | 0  | 0  | 1  | 0  | 0  |
| 0 | 1 | 1 | 0 | 1 | 1 | 0 | 0 | 0 | 1 | 0  | 0  | 0  | 1  | 0  | 1  |
| 1 | 0 | 1 | 0 | 1 | 1 | 0 | 0 | 0 | 1 | 0  | 0  | 0  | 1  | 0  | 1  |
| 1 | 0 | 1 | 0 | 1 | 1 | 0 | 0 | 0 | 1 | 0  | 0  | 0  | 1  | 1  | 0  |
| 1 | 1 | 0 | 1 | 1 | 1 | 0 | 0 | 0 | 1 | 0  | 0  | 0  | 1  | 1  | 1  |
| 1 | 1 | 0 | 1 | 1 | 0 | 1 | 0 | 0 | 1 | 0  | 0  | 1  | 0  | 0  | 0  |
| 0 | 1 | 1 | 0 | 1 | 0 | 0 | 1 | 0 | 1 | 0  | 0  | 1  | 0  | 0  | 1  |
| 0 | 1 | 1 | 0 | 0 | 1 | 1 | 1 | 0 | 1 | 0  | 0  | 1  | 0  | 1  | 0  |

510

410  420  430

**Fig. 5**

|    | 0 | 1 | 2 | 3 | 4 | 5 | 6 | 7 | 8 | 9 | 10 | 11 | 12 | 13 | 14 | 15 | 16 |
|----|---|---|---|---|---|---|---|---|---|---|----|----|----|----|----|----|----|
| 0  | 999 | 999 | 999 | 999 | 999 | 999 | 999 | 999 | 999 | 999 | 999 | 999 | 999 | 999 | 999 | 999 | 999 |
| 1  | 999 | 999 | 999 | 999 | 999 | 999 | 999 | 999 | 999 | 999 | 999 | 999 | 999 | 999 | 999 | 999 | 999 |
| 2  | 0 | 0 | 100 | 100 | 100 | 100 | 100 | 100 | 100 | 100 | 98.61 | 94.44 | 80.56 | 45.83 | 31.94 | 66.67 | 0 |
| 3  | 0 | 0 | 37.5 | 100 | 100 | 100 | 100 | 100 | 100 | 99.48 | 98.44 | 90.63 | 73.44 | 46.88 | 40.63 | 60.94 | 0 |
| 4  | 0 | 0 | 12.33 | 32.88 | 100 | 100 | 100 | 100 | 100 | 99.83 | 98.12 | 90.75 | 66.78 | 43.66 | 44.01 | 52.05 | 0 |
| 5  | 0 | 0 | 5.48 | 14.61 | 44.44 | 100 | 100 | 100 | 100 | 99.92 | 98.78 | 91.17 | 68.87 | 43.3 | 45.74 | 51.98 | 0 |
| 6  | 0 | 0 | 2.68 | 7.13 | 21.7 | 48.83 | 100 | 100 | 100 | 99.93 | 98.55 | 90.67 | 68.38 | 46.34 | 43.78 | 50.13 | 0 |
| 7  | 0 | 0 | 1.31 | 3.49 | 10.6 | 23.86 | 48.86 | 100 | 100 | 99.95 | 98.77 | 90.49 | 69.32 | 47.57 | 44.14 | 50.71 | 0 |
| 8  | 0 | 0 | 0.65 | 1.73 | 5.27 | 11.85 | 24.26 | 49.66 | 100 | 99.96 | 98.83 | 90.71 | 69.4 | 49.03 | 45.05 | 50.35 | 0 |
| 9  | 0 | 0 | 0.32 | 0.86 | 2.61 | 5.88 | 12.04 | 24.65 | 49.65 | 100 | 98.84 | 90.93 | 69.61 | 49.03 | 46.78 | 50.09 | 0 |
| 10 | 0 | 0 | 0.16 | 0.43 | 1.29 | 2.93 | 5.99 | 12.29 | 24.76 | 49.85 | 100 | 90.99 | 69.43 | 48.79 | 46.66 | 50.43 | 0 |
| 11 | 0 | 0 | 0.08 | 0.22 | 0.66 | 1.49 | 3.03 | 6.2 | 12.51 | 25.24 | 50.08 | 100 | 69.64 | 47.9 | 46.94 | 50.04 | 0 |
| 12 | 0 | 0 | 0.05 | 0.13 | 0.35 | 0.81 | 1.64 | 3.41 | 6.87 | 13.87 | 27.43 | 50 | 100 | 44.95 | 45.05 | 49.57 | 0 |
| 13 | 0 | 0 | 0.03 | 0.09 | 0.25 | 0.56 | 1.23 | 2.59 | 5.37 | 10.82 | 21.35 | 38.08 | 49.77 | 100 | 48.44 | 49.63 | 0 |
| 14 | 0 | 0 | 0.02 | 0.08 | 0.26 | 0.61 | 1.2 | 2.47 | 5.09 | 10.63 | 21.03 | 38.44 | 51.39 | 49.9 | 100 | 52.79 | 0 |
| 15 | 0 | 0 | 0.05 | 0.11 | 0.29 | 0.66 | 1.3 | 2.7 | 5.39 | 10.81 | 21.57 | 38.89 | 53.66 | 48.51 | 50.1 | 100 | 0 |
| 16 | 999 | 999 | 999 | 999 | 999 | 999 | 999 | 999 | 999 | 999 | 999 | 999 | 999 | 999 | 999 | 999 | 999 |

600

610

**Fig. 6**

|     | ... | i | i+1 | ... |
|-----|-----|---|-----|-----|
| ... | 1 |  |  |  |
| i |  | 1 | $P(I'|I)$ |  |
| i+1 |  | $P(I|I')$ | 1 |  |
| ... |  |  |  | 1 |

700

**Fig. 7**

|    | 19  | 20  | 21  | 22    | 23    | 24    | 25    | 26    | 27    | 28    | 29    | 30    | 31    | 32    | 33    | 34    | 35    | 36    |
|----|-----|-----|-----|-------|-------|-------|-------|-------|-------|-------|-------|-------|-------|-------|-------|-------|-------|-------|
| 19 | 999 | 999 | 999 | 999   | 999   | 999   | 999   | 999   | 999   | 999   | 999   | 999   | 999   | 999   | 999   | 999   | 999   | 999   |
| 20 | 999 | 999 | 999 | 999   | 999   | 999   | 999   | 999   | 999   | 999   | 999   | 999   | 999   | 999   | 999   | 999   | 999   | 999   |
| 21 | 0   | 0   | 100 | 0     | 0     | 0     | 0     | 0     | 0     | 0.53  | 2.13  | 4.26  | 2.13  | 0     | 0     | 0     | 0     | 0     |
| 22 | 0   | 0   | 0   | 100   | 100   | 100   | 100   | 100   | 100   | 100   | 99.97 | 100   | 0.03  | 0.08  | 0.08  | 0.08  | 0.08  | 0.11  |
| 23 | 0   | 0   | 0   | 100   | 100   | 100   | 100   | 100   | 100   | 100   | 99.97 | 100   | 0.03  | 0.08  | 0.08  | 0.08  | 0.08  | 0.11  |
| 24 | 0   | 0   | 0   | 99.58 | 99.58 | 100   | 100   | 100   | 100   | 100   | 99.93 | 99.93 | 0.1   | 0.08  | 0.08  | 0.08  | 0.08  | 0.11  |
| 25 | 0   | 0   | 0   | 92.97 | 92.97 | 93.36 | 100   | 100   | 100   | 100   | 99.94 | 93.41 | 6.68  | 0.11  | 0.11  | 0.11  | 0.11  | 0.14  |
| 26 | 0   | 0   | 0   | 66.63 | 66.63 | 66.91 | 71.67 | 100   | 100   | 100   | 99.89 | 80.43 | 33.09 | 0.25  | 0.25  | 0.25  | 0.25  | 0.27  |
| 27 | 0   | 0   | 0   | 32.57 | 32.57 | 32.71 | 35.03 | 48.88 | 100   | 100   | 99.87 | 68.24 | 41.44 | 0.26  | 0.26  | 0.26  | 0.26  | 0.27  |
| 28 | 0   | 0   | 0   | 15.66 | 15.66 | 15.72 | 16.84 | 23.5  | 48.07 | 100   | 99.87 | 41.58 | 70.51 | 0.23  | 0.23  | 0.23  | 0.23  | 0.24  |
| 29 | 0   | 0   | 0.01| 7.69  | 7.69  | 7.72  | 8.27  | 11.53 | 23.58 | 49.06 | 100   | 43.76 | 82.73 | 0.21  | 0.21  | 0.21  | 0.21  | 0.23  |
| 30 | 0   | 0   | 0.01| 8.69  | 8.69  | 8.72  | 8.73  | 10.49 | 18.2  | 23.08 | 49.44 | 100   | 62.55 | 0.22  | 0.22  | 0.22  | 0.22  | 0.24  |
| 31 | 0   | 0   | 0   | 0     | 0     | 0.01  | 0.5   | 3.42  | 8.77  | 31.04 | 74.13 | 49.61 | 100   | 0.23  | 0.23  | 0.23  | 0.23  | 0.24  |
| 32 | 0   | 0   | 0   | 0.45  | 0.45  | 0.45  | 0.64  | 2.09  | 4.36  | 8.09  | 15.36 | 14.09 | 18.27 | 100   | 99.55 | 99.55 | 99.55 | 99.55 |
| 33 | 0   | 0   | 0   | 0.46  | 0.46  | 0.46  | 0.64  | 2.1   | 4.38  | 8.13  | 15.43 | 14.16 | 18.36 | 100   | 100   | 100   | 100   | 100   |
| 34 | 0   | 0   | 0   | 0.46  | 0.46  | 0.46  | 0.64  | 2.1   | 4.38  | 8.13  | 15.43 | 14.16 | 18.36 | 100   | 100   | 100   | 100   | 100   |
| 35 | 0   | 0   | 0   | 0.46  | 0.46  | 0.46  | 0.64  | 2.1   | 4.38  | 8.13  | 15.43 | 14.16 | 18.36 | 100   | 100   | 100   | 100   | 100   |
| 36 | 0   | 0   | 0   | 0.58  | 0.58  | 0.58  | 0.75  | 2.09  | 4.18  | 7.94  | 15.04 | 13.95 | 17.96 | 91.48 | 91.48 | 91.48 | 91.48 | 100   |

810

**Fig. 8**   820   800

CALCULATING A P(I,I') VALUE THAT REFLECTS A LEVEL OF DEPENDENCY BETWEEN A CHANGE OF FIRST BIT AND A CHANGE OF A SECOND BIT IN A COMPOSITE-MESSAGE — 910

CALCULATING A P(I',I) VALUE THAT REFLECTS A LEVEL OF DEPENDENCY BETWEEN A CHANGE OF THE SECOND BIT AND A CHANGE OF THE FIRST BIT — 915

DETERMINING THE FIRST AND SECOND BITS BELONG TO THE SAME MESSAGE IF:
P(I,I') IS GREATER THAN A FIRST THRESHOLD, AND
A FUNCTION OF P(I',I) AND P(I,I') IS GREATER THAN A SECOND THRESHOLD. — 920

**Fig. 9**

**EP 3 787 260 B1**

## REFERENCES CITED IN THE DESCRIPTION

### Patent documents cited in the description

- US 2002174218 A